# EUROPÄISCHE PATENTANMELDUNG

(11) **EP 2 510 793 A2**
(43) Veröffentlichungstag der Anmeldung: **17.10.2012**
(21) Anmeldenummer: 12158378.5
(22) Anmeldetag: 07.03.2012
(51) Int. Cl.: A22B 5/16

(54) **Verfahren und Vorrichtung zum Enthäuten eines Schlachttieres**

(30) Priorität: 15.04.2011 DE 102011002096
(71) Anmelder: Banss Schlacht- und Fördertechnik GmbH, 35216 Biedenkopf (DE)
(72) Erfinder: Weide, Harald, 35216 Biedenkopf (DE); Schmidt, Frank, 35232 Dautphetal (DE)
(74) Vertreter: Stoffregen, Hans-Herbert

(57) **Zusammenfassung**

Die Erfindung bezieht sich auf ein Verfahren und eine Vorrichtung (20) zum Enthäuten eines Schlachttieres (10) umfassend zumindest einen um eine Achse drehbaren Rollenkörper (22, 24), der in einer zumindest abschnittsweise entlang des Schlachttieres verlaufenden Führung (37) verstellbar ist, wobei beim Drehen des Rollenkörpers in einer ersten Drehrichtung von dem Schlachttier abgezogene Haut aufwickelbar und beim Drehen in eine der ersten Richtung entgegengesetzten zweiten Drehrichtung die Haut abwickelbar ist. Damit der Durchsatz beim Enthäuten im Vergleich zu bekannten Konstruktionen gesteigert werden kann, wird vorgeschlagen, dass die Vorrichtung (20) zumindest zwei Rollenkörper (22, 24) aufweist, die entlang einer geschlossenen Bahn als die Führung verstellbar sind, dass die Bahn einen schlachttierzugewandten ersten Führungsabschnitt (37) und einen schlachttierabgewandten zweiten Führungsabschnitt (39) aufweist und dass der Rollenkörper in dem ersten Führungsabschnitt in der ersten Drehrichtung und in dem zweiten Führungsabschnitt in der zweiten Drehrichtung drehbar ist.

## Beschreibung

Die Erfindung bezieht sich auf eine Vorrichtung zum Enthäuten eines Schlachttieres umfassend zumindest einen um eine Achse drehbaren Rollenkörper, der in einer zumindest abschnittsweise entlang des Schlachttieres verlaufenden Führung verstellbar ist, wobei beim Drehen des zumindest einen Rollenkörpers in einer ersten Drehrichtung von dem Schlachttier Haut abziehbar und aufwickelbar und beim Drehen in einer der ersten Richtung entgegengesetzten zweiten Drehrichtung die Haut abwickelbar ist.

Ferner nimmt die Erfindung Bezug auf ein Verfahren zum Enthäuten eines Schlachttieres.

In Schlachtstraßen durchlaufen Schlachttiere nacheinander mehrere Arbeitsstationen, in denen das Schlachttier u. a. betäubt, gestochen, enthäutet, geöffnet und die Eingeweide entfernt werden, um sodann weiterverarbeitet zu werden.

Zum Enthäuten werden die Schlachttiere vorzugsweise an den Hinterläufen hängend auf eine Hautabzugstrommel ausgerichtet, die bei gleichzeitiger Drehung entlang des Schlachttierkörpers verstellt wird. Dabei wird zu Beginn ein Hautzipfel von einer Schlinge erfasst, die mit der Hautabzugsrolle verbunden ist. Die Hautabzugsrolle kann mittels eines Pneumatikzylinders entlang einer Führung verstellt werden. Nach dem Aufwickeln der Haut wird die Abzugstrommel in ihre Ausgangsposition bei gleichzeitigem Abwickeln der Haut und Abwerfen dieser zurückverfahren. Die Drehrichtung der Abzugstrommel beim Enthäuten ist umgekehrt zu der beim Abwickeln der Haut.

Eine gattungsgemäße Vorrichtung ist der US 5 997 393 A zu entnehmen. Dabei wird ein Rollenkörper, nachdem auf diesem eine Haut eines Schlachttiers aufgewickelt ist, auf einen Aufgabetrichter ausgerichtet, dem die abzuwickelnde Haut zugeführt wird.

Auch wenn sich entsprechende Enthäuter überaus bewährt haben, ist der Nachteil gegeben, dass während des Zurückverfahrens der Abzugstrommel, also von der Position, in der die Haut vollständig von der Abzugstrommel aufgenommen ist, zu derjenigen, in der die Haut von der Abzugstrommel abgeworfen und diese in ihre Ausgangsposition zurückverfahren ist, ein weiteres Schlachttier nicht enthäutet werden kann, so dass ggfs. mehrere Enthäuterstationen parallel zueinander in einer Schlachtstraße angeordnet sein müssen, um die Förderleistung und somit den Durchsatz nicht unerwünscht einzuschränken.

Der US 3 235 905 A ist ein Enthäuter zu entnehmen, der eine geschlossene Bahn mit einer von dieser ausgehenden Kette aufweist, mittels der ein Enthäuten erfolgt.

Der vorliegenden Erfindung liegt die Aufgabe zu Grunde, eine Vorrichtung und ein Verfahren der eingangs genannten Art so weiterzubilden, dass der Durchsatz beim Enthäuten im Vergleich zu bekannten Konstruktionen gesteigert werden kann.

Zur Lösung der Aufgabe wird vorrichtungsgemäß im Wesentlichen vorgeschlagen, dass die Vorrichtung zumindest zwei Rollenkörper aufweist, die entlang einer geschlossenen Bahn als die Führung verstellbar sind, dass die Bahn einen schlachttierzugewandten ersten Führungsabschnitt und einen schlachttierabgewandten zweiten Führungsabschnitt aufweist und dass jeder Rollenkörper in dem ersten Führungsabschnitt in der ersten Drehrichtung und in dem zweiten Führungsabschnitt in der zweiten Drehrichtung drehbar ist.

Erfindungsgemäß wird eine Endlosführung benutzt, entlang der die zumindest zwei Rollenkörper, also Hautabzugstrommeln nach dem Paternoster-Prinzip relativ zu dem Schlachttierkörper bewegt werden, wobei unmittelbar nach dem Abziehen der Haut von einem Schlachttier ein weiteres Schlachttier in den Bereich der Vorrichtung eingeschleust werden kann, da der zweite Rollenkörper zu einem erneuten Hautabzug zur Verfügung steht, ohne dass zuvor von dem ersten Rollenkörper die aufgewickelte Haut entfernt sein muss. Dabei erfolgt der Antrieb der Rollenkörper in Bezug auf ihre Drehrichtungen unabhängig voneinander. Die Bewegung entlang der Führungsbahn sollte demgegenüber gekoppelt sein.

Insbesondere ist vorgesehen, dass die Rollenkörper jeweils über eine Halterung wie Schlitten mit einer die Bahn vorgebenden Endloskette oder ein gleichwirkendes Element verbunden sind. Dabei kann der Antrieb für den jeweiligen Rollenkörper ein mit der den Rollenkörper lagernden Halterung verbundener Elektroantrieb sein. Die Versorgung der Elektroantriebe kann sodann über Schleifleisten erfolgen, die entlang der Führungsbahn verlaufen.

Es besteht jedoch auch die Möglichkeit, dass der Antrieb ein Fluidmotor wie Hydraulik- oder Pneumatikmotor ist, der über entlang der Führungsbahn verlaufende Fluidleitungen mit Fluid beaufschlagbar ist.

Ein bevorzugter Lösungsvorschlag sieht vor, dass jeder Rollenkörper über ein gesondertes erstes Transmissionsmittel wie Kette, Riemen oder Gurt in Wirkverbindung steht, wobei jedes Transmissionsmittel unabhängig antreibbar ist.

Bei dem ersten Transmissionsmittel handelt es sich insbesondere um ein Endloselement, das innerhalb der geschlossenen Bahn, die die Führung für die Rollenelemente bildet, verläuft. Des Weiteren kann der Rollenkörper über ein zweites Transmissionsmittel wie Kette, Riemen oder Gurt mit einem in der Halterung gelagerten Übertragungselement wie Scheibe oder Rolle verbunden sein, die über das erste Transmissionsmittel antreibbar ist.

Hierzu kann von einer Welle eine erste Scheibe wie Kettenrad ausgehen, das mit dem ersten Transmissionsmittel wechselwirkt. Ferner ist mit der Welle eine zweite Scheibe wie Kettenrad verbunden, das mit dem zweiten Transmissionsmittel in Wirkverbindung steht, über das die Abzugsrolle in Drehbewegung versetzt wird.

Somit wird mit konstruktiv einfachen Maßnahmen ein Drehantrieb für jeden Rollenkörper zur Verfügung gestellt, um unabhängig voneinander die Rollenkörper in die gewünschte Drehrichtung drehen zu können. Die ersten Transmissionsmittel werden dabei insbesondere über einen Elektromotor angetrieben, wobei die Antriebsleistung in Abhängigkeit vom Widerstand beim Abziehen der Haut geregelt werden kann.

Die zwei Rollenkörper sind des Weiteren insbesondere diametral oder in etwa diametral zum Mittelpunkt der Führung bildenden geschlossenen Bahn positioniert.

Unabhängig hiervon ist insbesondere vorgesehen, dass zwei parallel verlaufende geführte Endlosketten die Führung bilden, dass jede Endloskettenbahn in Seitenansicht vorzugsweise eine Rechteckgeometrie aufweist, und dass zwischen den Endlosbahnen und von den Endlosketten ausgehend die zumindest zwei Rollenkörper verlaufen. Dabei ist jede Endloskette über ein Antriebsrad antreibbar, wobei die Antriebsräder über eine durchgehende Welle verbunden sind, die ihrerseits antreibbar ist.

Besonders hervorzuheben ist, dass jedem Rollenkörper ein mit Fluidleitungen verbundender Hydraulikmotor zugeordnet ist, mittels dessen der Rollenkörper in die gewünschte Drehrichtung antreibbar ist, und dass die Fluidleitungen eines jeden Hydraulikmotors von einer Aufwickelrolle ausgehen, über die die Fluidleitungen unabhängig von der Position des Rollenkörpers gespannt sind. Dabei ist insbesondere vorgesehen, dass die Aufwickelrollen innerhalb von von den Endloskettenbahnen umgebenem Raum angeordnet und um jeweils eine Achse drehbar sind, die vorzugsweise fluchtend zueinander ausgerichtet sind. Dabei sollten die Aufwickelrollen in etwa im Mittenbereich der vorzugsweise eine Rechteckgeometrie aufweisenden Endlosbahn angeordnet sein.

Wird bevorzugterweise die Halterung wie der Schlitten oder Traverse, in dem bzw. der der Rollenkörper gelagert ist, von den zwei Endlosketten oder -förderer als die Führungen entlang der Endlosbahn bewegt, so besteht auch die Möglichkeit, dass der Rollenkörper bzw. dessen Halterung einen Antrieb aufweist, über den die Halterung entlang der geschlossenen Bahn verstellbar ist. Somit stellt die Bahn eine passive Führung dar, wohingegen bei der Verwendung eines Endlosförderers wie Endloskette oder -riemen oder -gurt die Führung als aktive Führung bezeichnet werden kann.

Ein Verfahren zum Enthäuten eines Schlachttieres insbesondere unter Verwendung von Merkmalen der zuvor beschriebenen Vorrichtung zeichnet sich dadurch aus, dass ein erster und ein zweiter Rollenkörper in der geschlossenen Bahn angeordnet werden, dass sich der erste Rollenkörper zum Abziehen der Haut und Aufwickeln dieser entlang des Schlachttieres in den erstem Führungsabschnitt und in der ersten Drehrichtung gedreht bei gleichzeitigem Verstellen des zweiten Rollenkörpers in dem zweiten Führungsabschnitt und Drehen des zweiten Rollenkörpers in der zweiten Drehrichtung verstellt wird. Dabei werden die Rollenkörper über getrennt voneinander betätigbare Antriebe wahlweise in der ersten oder der zweiten Drehrichtung gedreht.

Insbesondere wird als Antrieb ein Transmissionsmittel wie Endloskette oder -riemen oder -gurt benutzt, über das die gewünschte Drehgeschwindigkeit und Drehrichtung auf den jeweiligen Rollenkörper übertragen wird. Es besteht jedoch auch die Möglichkeit, dass der jeweilige Rollenkörper von einer entlang der Führung durch Eigenantrieb verfahrbaren Halterung ausgeht, über die der Rollenkörper gelagert wird.

Insbesondere ist vorgesehen, dass jeder Rollenkörper über einen gesonderten Hydraulikmotor in die gewünschte Drehrichtung versetzt wird, wobei jeder Hydraulikmotor mit Fluidleitungen verbunden ist, die von jeweils einer vorgespannten Aufwickelvorrichtung ausgehen. Hierdurch wird sichergestellt, dass die Fluidleitungen unabhängig von der Stellung des Rollenkörpers stets gespannt werden.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung eines der Zeichnung zu entnehmenden bevorzugten Ausführungsbeispiels.

Es zeigen:
- Fig. 1: einen Ausschnitt einer Arbeitsstation einer Schlachtstraße in Seitenansicht zum Abziehenvon Haut von einem Schlachttier und
- Fig. 2: eine entsprechende Arbeitsstation in Vorderansicht,
- Fig. 3: die Arbeitsstation in Draufsicht,
- Fig. 4: eine Seitenansicht einer Arbeitsstation zum Abziehen von Haut von einem Schlachttier und
- Fig. 5: eine Draufsicht auf die Arbeitsstation gemäß Fig. 4.

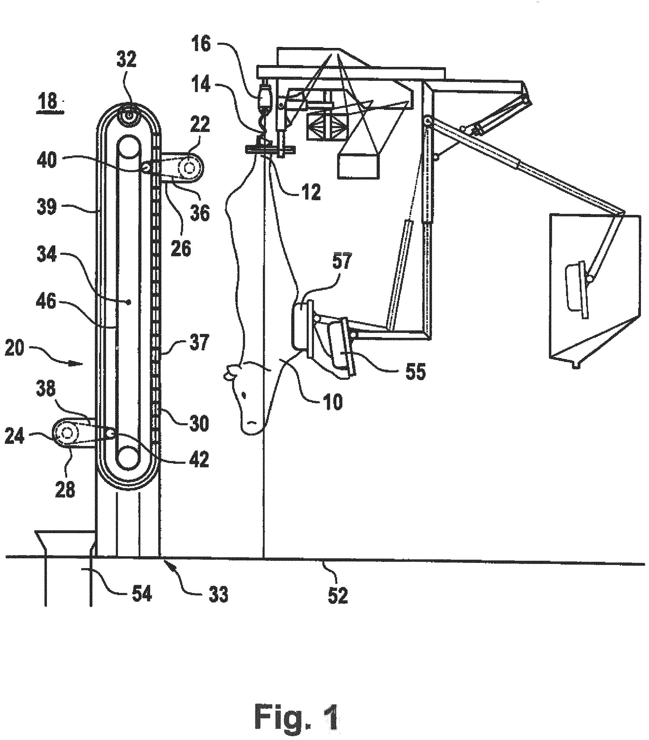

Nach dem Betäuben und Stechen eines Schlachttiers, insbesondere Rind, ist es erforderlich, dass dieses enthäutet wird. Ein entsprechendes Schlachttier ist in Fig. 1 rein prinzipiell dargestellt und mit dem Bezugszeichen 10 gekennzeichnet. Aus Gründen der Vereinfachung wird das Schlachttier 10 nachstehend als Rind bezeichnet.

Wie die Fig. 1 verdeutlicht, wird das Rind 10 an seinen Hinterläufen 12 auf einen Haken 14 aufgehängt, der entlang einer Rohrbahn 16 gefördert wird, die durch eine Schlachtstraße führt. In einer in Fig. 1 im Ausschnitt dargestellten Enthäuterstation 18 als Arbeitsstation ist eine Enthäutervorrichtung 20 angeordnet, die zwei als Hautabzugsrollen oder Enthäuterrollen 22, 24 zu bezeichnende Rollenkörper aufweist, auf die von dem Rind 10 abzuziehende Haut aufgewickelt bzw. abgewickelt wird. Die Enthäuterrollen 22, 24 sind in einer Halterung wie Schlitten 26, 28 drehbar gelagert, die ihrerseits mit zwei parallel zueinander und beabstandeten Endlosketten 30, 31 verbunden sind und somit entlang der von den Endlosketten 30, 31 vorgegebenen Bahn gefördert werden.

Die Endlosketten 30, 31 werden über im oberen Bereich vorhandene Kettenräder 32 angetrieben, die mit einem nicht dargestellten Elektromotor oder einem sonstigen Antrieb verbunden sein können. Im unteren Bereich werden die Endlosketten 30, 31 um eine nicht dargestellte Umlenkrolle geführt.

Die Bahn, auch Führungsbahn zu nennen, die durch den Förderweg der Endlosketten 30, 31 vorgegeben wird, setzt sich aus einem schlachttierzugewandten Führungsabschnitt 37 und einem schlachttierabgewandten Führungsabschnitt 39 zusammen. Zwischen diesen verlaufen die Umlenkbereiche mit den Umlenkrollen und den Kettenrädern 32, die jeweils von einer gemeinsamen Welle ausgehen können.

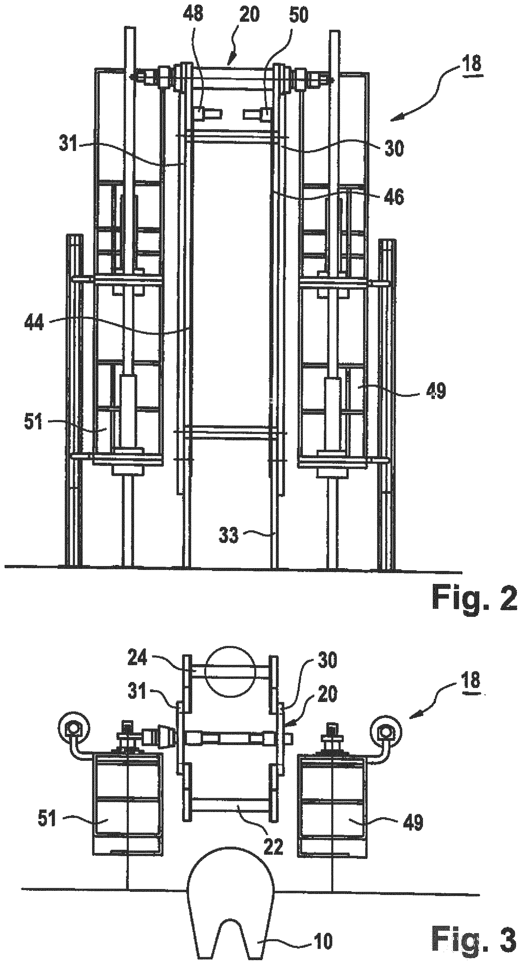

Die Kettenräder 32 und die Umlenkrollen werden dabei in einem Gestell 33 gelagert, wie sich aus einem Vergleich der Fig. 1 und 2 ergibt.

Des Weiteren wird aus der Zeichnung erkennbar, dass die Schlitten 26, 28 und damit die Enthäuterrollen 22, 24 diametral zum Mittelpunkt 34 der durch die Endlosketten 30, 31 vorgegebenen Führungsbahn angeordnet sind.

Damit die Enthäuterrollen 22, 24 unabhängig voneinander und in gewünschter Drehrichtung drehbar sind, werden die Enthäuterrollen 22, 24 über als zweite Transmissionsmittel bezeichnete Endloselemente wie -ketten oder -gurte 36, 38 mit von einer Welle ausgehenden Scheiben 40, 42 verbunden. Von jeder Welle geht des Weiteren eine nicht dargestellte Scheibe bzw. ein Kettenrad aus, wobei jede Scheibe bzw. jedes Kettenrad mit einer gesonderten und als erstes Transmissionsmittel bezeichneten Endloskette 44, 46 oder Endlosgurt in Wirkverbindung steht, wobei die ersten Transmissionsmittel 44, 46 unabhängig voneinander über z. B. Elektromotore 48, 50 antreibbar sind.

Wie sich aus der Vorderansicht gemäß Fig. 2 ergibt, verlaufen die die Enthäuterrollen 22, 24 antreibbaren Endlosketten 44, 46 oder gleichwirkende Elemente zwischen den äußeren Endlosketten 30, 31.

Seitlich neben dem Gestell 33 sind Hubpodeste 48, 50 vorhanden, auf denen sich Personen befinden können, um den Enthäutungsvorgang einzuleiten bzw. zu kontrollieren. In der Fig. 1 befindet sich die Enthäutervorrichtung in Bezug auf die Enthäutertrommel 22 in einer Ausgangsstellung, in der ein nicht dargestellter Hautzipfel von dem Schlachttier 10 insbesondere über eine Kettenschlinge erfasst ist. Die Schlinge ist mit der Enthäutertrommel 22 verbunden. Sodann werden die Endlosketten 30, 31 im Uhrzeigersinn bewegt, wodurch der Schlitten 26 in Richtung des Bodens 52 und der Schlitten 28 von diesem weg verstellt werden. Gleichzeitig werden die Enthäutertrommeln 22, 24 über die inneren Endlosketten 44, 46 oder gleichwirkende erste Transmissionsmittel in Drehbewegung versetzt, wobei die Drehrichtungen der Enthäutertrommel 22, 24 entgegengesetzt sind. Wird z. B. die Enthäutertrommel 22 zum Abziehen und Aufwickeln der von dem Rind 10 abzuziehenden Haut im Uhrzeigersinn gedreht, so wird die sich auf dem schlachttierabgewandten Führungsabschnitt 39 vom Boden weg geförderte Enthäutertrommel 24 entgegen dem Uhrzeigersinn gedreht. Hierdurch erfolgt ein Abwickeln von auf der Enthäutertrommel 24 aufgewickelter Haut, so dass diese nach dem Abwickeln in einen unterhalb des Transportweges der Enthäuter- oder Abzugstrommel 24 im Bodenbereich befindlichen Hauttrichter 54 abgeworfen werden kann. Nachdem über die Enthäuterrolle 22 das Rind 10 enthäutet ist und die Enthäutertrommel 22 in die Position gelangt, die der in Fig. 1 eingezeichneten Position der Enthäutertrommel 24 entspricht, wird die Drehrichtung umgekehrt, um ein Abwickeln zu ermöglichen. Da die Schlitten 26, 28 fest mit den als Endlosförderer 30, 31 zu bezeichnenden Endlosketten 30, 31 und diametral zum Mittelpunkt 34 von deren Umlaufbahn mit diesen verbunden sind, befindet sich sodann die zuvor in dem schlachttierabgewandten Führungsbereich 39 befindliche Enthäutertrommel 24 in der Position der in der Zeichnung dargestellten Enthäutertrommel 22. Somit kann unmittelbar nach Enthäuten eines Rindes 10 ein weiteres Rind enthäutet werden, ohne dass es zuvor erforderlich ist, dass die abgezogene Haut von der Enthäutertrommel abgewickelt wird.

Um beim Enthäuten Verletzungen, insbesondere Beschädigungen an der Wirbelsäule am Rind 10 auszuschließen, erfolgt eine Elektrostimulation, wodurch eine Muskelkontraktion bewirkt wird. Entsprechende über Zylinder verstellbare die Elektrostimulation ermöglichende plattenartige Elektroden sind in der Fig. 1 rein prinzipiell dargestellt und mit den Bezugszeichen 55, 57 gekennzeichnet. Man spricht bei der diesbezüglichen Elektrostimulation auch von einer "Schockvorrichtung".

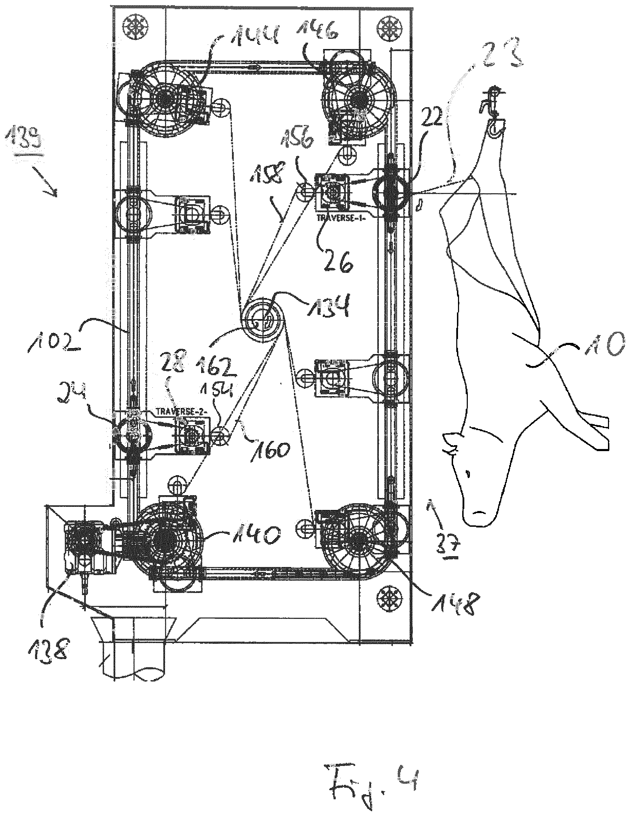

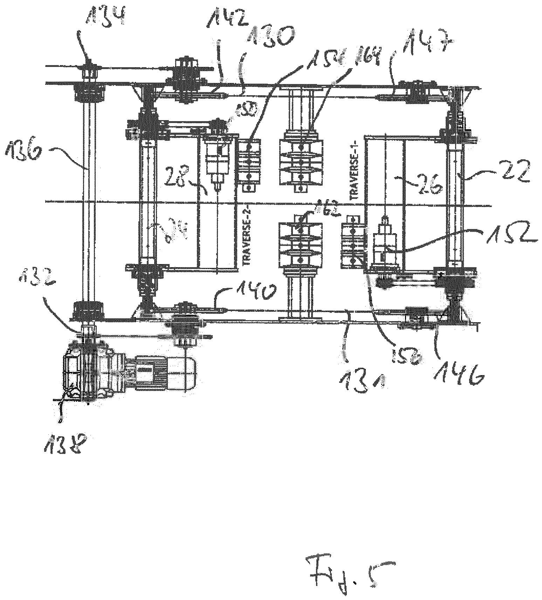

Den Fig. 4 und 5 ist eine besonders hervorzuhebende Ausführungsform einer Enthäuterstation zu entnehmen, in der die erfindungsgemäße Lehre verwirklicht wird, d. h., dass zumindest zwei Rollenkörper 22, 24 entlang einer Endlosbahn 102 bewegbar sind, die entsprechend der Darstellung der Fig. 4 in Seitenansicht eine Rechteckgeometrie aufweist, also gemeinsam einen quaderförmigen Raum begrenzen. Dabei sind die Rollenkörper 22, 24 mit den auch als Traverse zu bezeichnenden Schlitten 26, 28 zusätzlich in unterschiedlichen Positionen dargestellt, ohne dass diese näher gekennzeichnet sind. Durch die unterschiedlichen Darstellungen soll der maximale Abstand verdeutlicht werden, die jede Traverse bzw. Halterung 26, 28 in Bezug auf den Mittelpunkt 134 der Führungsbahn 102 einnehmen kann.

Die Führungsbahn 102 wird entsprechend dem Ausführungsbeispiel in Fig. 1 bis 3 durch geführte Endlosketten 130, 131 gebildet. Zum Antreiben der Endlosketten 130, 131 sind Antriebskettenräder 132, 134 vorgesehen, die über eine Welle 136 verbunden sind, die von einem Antrieb 138 wie Kegelrad-Getriebemotor in Drehbewegung versetzbar ist. Die Kettenräder 132, 134 treiben über Ketten 140, 141 oder Riemen Umlenkrollen 140, 142 an. Die Ketten 130, 131 werden um weitere Umlenkrollen 144, 146, 147, 148 umgelenkt, wie rein prinzipiell der Zeichnung zu entnehmen ist.

Die Halterungen 26, 28 weisen jeweils einen Hydraulikmotor 150, 152 mit Anschlüssen 154, 156 auf, die mit Hydraulikleitungen 158, 160 verbunden sind, um die Hydraulikmotoren 150, 152 betätigen zu können. Dabei sind jeweils drei Leitungen vorgesehen, und zwar eine Leitung, um den Hydraulikmotor im Uhrzeigersinn und eine Leitung um den Hydraulikmotor entgegen dem Uhrzeigersinn in Drehbewegung versetzen zu können. Zusätzlich ist eine Leitung als Leckölanschluss vorgesehen. Ferner ist eine Leitung zur Übertragung von elektrischen Signalen bzw. Steuersignalen und gegebenenfalls eine zur Zugentlastung vorgesehen. Insoweit wird jedoch auf hinlänglich bekannte Konstruktionen von Hydraulikmotoren verwiesen. Die Leitungsbündel 158, 160 führen jeweils zu einer Aufwickelrolle 162, 164, die jeweils entsprechend der Anzahl der Leitungen eine entsprechende Anzahl von Anschlüssen aufweist, um so das Fluid zuführen bzw. abführen zu können. Die Aufwickelrollen 162, 164 sind um 360° drehbar und spannbar, so dass - wie die Prinzipdarstellung gemäß Fig. 4 verdeutlicht - die Leitungen 158, 160 unabhängig von der Stellung der Halterungen 26, 28 stets gespannt sind.

Aus der Seitenansicht gemäß Fig. 4 ergibt sich des Weiteren, dass die Aufwickelrollen 162, 164 entlang der Mittelachse des von den Endlosbahnen 102 umgebenden Raums verlaufen, wobei die Drehachsen der Aufwickelrolle 162, 164 zueinander fluchten, wie ein Vergleich der Fig. 4 und 5 verdeutlicht.

Mit Hilfe der Hydraulikmotoren 150, 152 können die Aufwickelrollen 22, 24 entsprechend der Ausrichtung zu dem Schlachttier 10 in oder entgegen dem Uhrzeigersinn in Drehbewegung versetzt werden. Beim Enthäuten, also dann, wenn die Abzugsrolle 22 über eine Kette 23 mit einem Hautzipfel des Schlachttiers 10 verbunden ist, im Uhrzeigersinn, um die abzuziehende Haut aufwickeln zu können. Bewegt sich die Halterung 26 mit der Aufwickelrolle 26 in dem dem Schlachttier abgewandten Bereich 139 der Endlosbahn 102, also auf der zum Schlachttier 10 gegenüberliegenden Seite, so wird die Drehbewegung der Rolle 22 umgedreht, d. h. entgegen dem Uhrzeigersinn gedreht, um die aufgewickelte Haut abwerfen zu können.

## Patentansprüche

1. Vorrichtung (20) zum Enthäuten eines Schlachttieres (10) umfassend zumindest einen um eine Achse drehbaren Rollenkörper (22, 24), der in einer zumindest abschnittsweise entlang des Schlachttieres verlaufenden Führung (37) verstellbar ist, wobei beim Drehen des Rollenkörpers in einer ersten Drehrichtung von dem Schlachttier abgezogene Haut aufwickelbar und beim Drehen in eine der ersten Richtung entgegengesetzten zweiten Drehrichtung die Haut abwickelbar ist, **dadurch gekennzeichnet,**
**dass** die Vorrichtung (20) zumindest zwei Rollenkörper (22, 24) aufweist, die entlang einer geschlossenen Bahn als die Führung verstellbar sind, dass die Bahn einen schlachttierzugewandten ersten Führungsabschnitt (37) und einen schlachttierabgewandten zweiten Führungsabschnitt (39) aufweist und dass der Rollenkörper in dem ersten Führungsabschnitt in der ersten Drehrichtung und in dem zweiten Führungsabschnitt in der zweiten Drehrichtung drehbar ist.

2. Vorrichtung nach Anspruch 1,
**dadurch gekennzeichnet,**
**dass** die Rollenkörper (22, 24) jeweils über eine Halterung wie Schlitten (26, 28) mit zumindest einem die Bahn vorgebenden Endlosmittel wie Endloskette (30, 31, 130, 138) verbunden sind und dass jeder Rollenkörper mit einem von dem anderen Rollenkörper unabhängigen Antrieb (44, 46, 150, 152) verbunden ist.

3. Vorrichtung nach Anspruch 1 oder 2,
**dadurch gekennzeichnet,**
**dass** der Antrieb ein mit der Halterung (26, 28) verbundener Elektroantrieb ist, der über eine entlang der Bahn verlaufende Schleifleiste strombeaufschlagbar ist.

4. . Vorrichtung nach zumindest einem der vorhergehenden Ansprüche,
**dadurch gekennzeichnet,**
**dass** der Antrieb ein Fluidmotor wie Hydraulik- oder Pneumatikmotor (152, 154) ist, der über eine entlang der Bahn verlaufende Fluidleitung (158, 160) mit Fluid beaufschlagbar ist.

5. Vorrichtung nach zumindest einem der vorhergehenden Ansprüche,
**dadurch gekennzeichnet,**
**dass** jeder Rollenköper (22, 24) zu dessen Drehen um die Achse über ein gesondertes erstes Transmissionsmittel (44, 46) wie Endloskette, -riemen oder -gurt in Wirkverbindung steht und dass die ersten Transmissionsmittel unabhängig voneinander antreibbar sind, wobei das erste Transmissionsmittel (44, 46) insbesondere ein Endloselement ist, das innerhalb der geschlossenen Bahn verläuft.

6. . Vorrichtung nach zumindest einem der vorhergehenden Ansprüche,
**dadurch gekennzeichnet,**
**dass** der Rollenkörper (22, 24) über ein zweites Transmissionsmittel (36, 38) wie Endloskette, -riemen oder -gurt mit einem in der Halterung gelagerten Übertragungselement wie Scheibe oder Rad verbunden ist, die bzw. das über das erste Transmissionsmittel (44, 46) antreibbar ist.

7. Vorrichtung nach zumindest einem der vorhergehenden Ansprüche,
**dadurch gekennzeichnet,**
**dass** der zweite Führungsabschnitt (39) oberhalb einer Aufnahme wie Hauttrichter (54) verläuft.

8. Vorrichtung nach zumindest einem der vorhergehenden Ansprüche,
**dadurch gekennzeichnet,**
**dass** die zwei Rollenkörper (22, 24) diametral oder in etwa diametral zum Mittelpunkt (34, 134) der die Führung bildenden geschlossenen Bahn (102) positioniert sind.

9. Vorrichtung nach zumindest einem der vorhergehenden Ansprüche,
**dadurch gekennzeichnet,**
**dass** die Führung von zwei parallel verlaufenden geführten jeweils die geschlossene Bahn bildenden Endlosketten (130, 131) gebildet ist, dass jede Endloskettenbahn in Seitenansicht vorzugsweise eine Rechteckgeometrie aufweist, und dass zwischen den Endlosbahnen und von den Endlosketten ausgehend die zumindest zwei Rollenkörper (22, 24) mit ihren Halterungen (26, 28) verlaufen.

10. Vorrichtung nach zumindest einem der vorhergehenden Ansprüche,
**dadurch gekennzeichnet,**
**dass** jede Endloskette (130, 131) über ein Antriebsrad (132, 134) antreibbar ist, wobei die Antriebsräder über eine durchgehende Welle (136) verbunden sind, die ihrerseits antreibbar ist.

11. Vorrichtung nach zumindest einem der vorhergehenden Ansprüche,
**dadurch gekennzeichnet,**
**dass** jedem Rollenkörper (22, 24) ein mit Fluidleitungen (158, 160) verbundener Hydraulikmotor (150, 152) zugeordnet ist, mittels dessen der Rollenkörper in die gewünschte Drehrichtung antreibbar ist, und dass die Fluidleitungen eines jeden Hydraulikmotors von einer Aufwickelrolle (162, 164) ausgehen, über die die Fluidleitungen unabhängig von der Position des Rollenkörpers gespannt sind.

12. Vorrichtung nach zumindest einem der vorhergehenden Ansprüche,
**dadurch gekennzeichnet,**
**dass** die Aufwickelrolle (162, 164) innerhalb von von den Endloskettenbahnen (102) umgebenen Raum angeordnet und um jeweils eine Achse drehbar sind, die vorzugsweise fluchtend zueinander ausgerichtet sind.

13. Verfahren zum Enthäuten eines Schlachttiers (10) vorzugsweise mit einer Vorrichtung (20) nach zumindest Anspruch 1,
**dadurch gekennzeichnet,**
**dass** ein erster und ein zweiter Rollenkörper (22, 24) in der geschlossenen Bahn angeordnet werden, dass der erste Rollenkörper zum Abziehen der Haut und Aufwickeln dieser entlang des Schlachttieres in der ersten Richtung gedreht in dem ersten Führungsabschnitt (37) bei gleichzeitigem Verstellen des zweiten Rollenkörpers in dem zweiten Führungsabschnitt (39) und Drehen des zweiten Rollenkörpers in der zweiten Drehrichtung verstellt wird.

14. Verfahren nach Anspruch 13,
**dadurch gekennzeichnet,**
**dass** die Rollenkörper (22, 24) über getrennt voneinander betätigbare Antriebe (44, 46) wahlweise in der ersten oder in der zweiten Drehrichtung gedreht werden.

15. Verfahren nach zumindest Anspruch 13 oder 14,
**dadurch gekennzeichnet,**
**dass** jeder Rollenkörper (22, 24) über einen diesem zugeordneten Hydraulikmotor (150, 152) in Drehung versetzt wird, und dass jeder Hydraulikmotor über Fluidleitungen (160, 162) mit einem stationär angeordneten Aufwickelkörper (162, 164) verbunden ist, über den die Fluidleitungen unabhängig von der Stellung des Rollenkörpers bzw. der diesen aufnehmenden Halterung (26, 28) gespannt werden.
